# EUROPEAN PATENT SPECIFICATION

(11) **EP 1 713 240 B1**
(45) Date of publication and mention of the grant of the patent: **09.06.2010**
(21) Application number: 06006877.2
(22) Date of filing: 31.03.2006
(51) Int. Cl.: H04M 1/253, H04M 1/725

(54) **Wireless handset for VOIP**
Funkhandapparat für VOIP
Combiné mobile pour VOIP

(30) Priority: 11.04.2005 US 102649
(43) Date of publication of application: 18.10.2006
(73) Proprietor: Wistron Corporation, Taipei Hsien 221 (TW)
(72) Inventor: Tsai, Chu-Chia c/oWistron Corporation, Hsichih Taipei Hsien 221 (TW); Lee, Chia-Hsien c/oWistron Corporation, Hsichih Taipei Hsien 221 (TW); Huang, Lai-Shi c/o Wistron Corporation, Hsichih Taipei Hsien 221 (TW)
(74) Representative: Viering, Hans-Martin

(56) References cited:
- EP-A- 0 629 071
- WO-A-2004/014050
- GB-A- 2 290 007
- US-A- 6 138 036
- US-A1- 2005 003 858
- US-B1- 6 292 148

## Description

### BACKGROUND OF THE INVENTION

### 1. Field of the Invention

The present invention relates to a wireless handset, and more particularly, to a wireless handset utilizing Voice over Internet Protocol (VoIP). Accordingly, the present invention can be adapted to communicate with a communications device through the Internet connection of a computer, such as a laptop computer, desktop computer or the like.

### 2. Description of the Related Art:

Today, information technology provides links to the Internet that enables people to exchange information with each other easily. One result of this is that people have begun to rely on portable electronic devices, and they are now particularly relying on computers.

In the field of communications, though e-mails and instant messaging are very common, conventional communications, such as conversation through the telephone, is preferable for most users. Mobile phones (or cell phones) are convenient, but they may have problems with reception in remote areas. Additionally, the communications systems may be different in different countries, which can create great inconvenience for those users who need to travel often. Moreover, if a user uses a mobile phone to communicate, it is necessary to carry a charger or several batteries for the mobile phone, which is also a source of inconvenience for the user when traveling.

A very convenient and cheap way to communicate is to use VoIP through the Internet. VoIP technology compresses the voice signal into voice data packets and transmits the voice data across an IP network. That is, VoIP uses the Internet to transmit a voice signal using a telecommunications application. The Internet not only provides instant voice services, but it is also available in every corner of the world, which can make it much easier for users to have long distance conversations with VoIP over traditional public switched telephone networks (PSTN).

VoIP technology has undergone development for quite some time, and has achieved a suitable communications quality. However, if a user wants to converse using an embedded speaker and microphone in a computer, the speaker may make it easy for a third party to overhear the conversation, and the microphone is limited by its effective range. The user thus must face the microphone and/or speaker very closely, which may be uncomfortable for the user.

A Bluetooth handset exists on the market, which the user can wear. However, wearing the Bluetooth handset on the ear all the time can be an inconvenience. Female users in particular may find wearing the Bluetooth handset troublesome. When the Bluetooth handset is taken off, it becomes yet another accessory to carry. Normally the Bluetooth handset is quite small so that it may be easily worn. But because it is very small, it is easily lost if there is no fixed place to store it. Also, the distance between the mouth and the microphone of a small sized Bluetooth handset is relatively long, which may interfere with the conversation quality.

### SUMMARY OF THE INVENTION

A primary objective of the present invention is to provide a wireless handset for voice over Internet protocol (hereinafter abbreviated as "VoIP"), which may be put into an expansion slot of a computer, such as a PCMCIA slot of a laptop computer or a desktop computer. Another objective of the present invention is to provide a rechargeable VoIP wireless handset for long-use users. A third objective of the present invention is to provide a VoIP wireless handset having that is held in the same manner as a traditional mobile phone.

The present invention provides a VoIP wireless handset that may be inserted into an expansion socket of a computer. The computer can connect to another communication device through the Internet connection of the computer to transmit voice data.

The VoIP wireless handset of the present invention comprises a speaker, a microphone, a printed circuit board, a connector and a case for covering the printed circuit board. The speaker and the microphone are each electronically connected to the printed circuit board. The printed circuit board comprises a processor and a transmission interface. With the transmission interface, voice data can be transmitted between the VoIP wireless handset and the computer. Subsequently, the voice data can be transmitted through the Internet connection of the computer to a communication device located at another site to provide instant communications.

The connector of the VoIP wireless handset according to the present invention is connected electronically to the printed circuit board, and the VoIP wireless handset may be inserted into the expansion socket of the computer to provide an electronic connection. The connector preferably provides a connection between the VoIP wireless handset and the computer and further enables charging of a battery in the VoIP wireless handset.

Other objects, advantages, and novel features of the invention will become more apparent from the following detailed description when taken in conjunction with the accompanying drawings.

### BRIEF DESCRIPTION OF THE DRAWINGS

- FIG. 1: is a schematic drawing of a VoIP wireless handset according to the present invention, showing connections of the VoIP wireless handset, a laptop computer, and another communications device.
- FIG. 2: is a system diagram of a VoIP wireless handset according to the present invention.
- FIG. 3: is a perspective view of one embodiment according to the present invention.
- FIG. 4: is a perspective view according to FIG. 3 with a microphone portion opened.
- FIG. 5: is a perspective view of another embodiment according to the present invention with different buttons.
- FIG. 6: is a perspective view of another embodiment with a different case in accordance with the present invention.
- FIG. 7A: is a perspective view of another embodiment with yet another different case in accordance with the present invention.
- FIG. 7B: is a perspective view according to FIG. 7A with a microphone portion opened.

### DETAILED DESCRIPTION OF THE PREFERRED EMBODIMENT

The following descriptions of the preferred embodiments are provided to help understand the features and structure of the present invention.

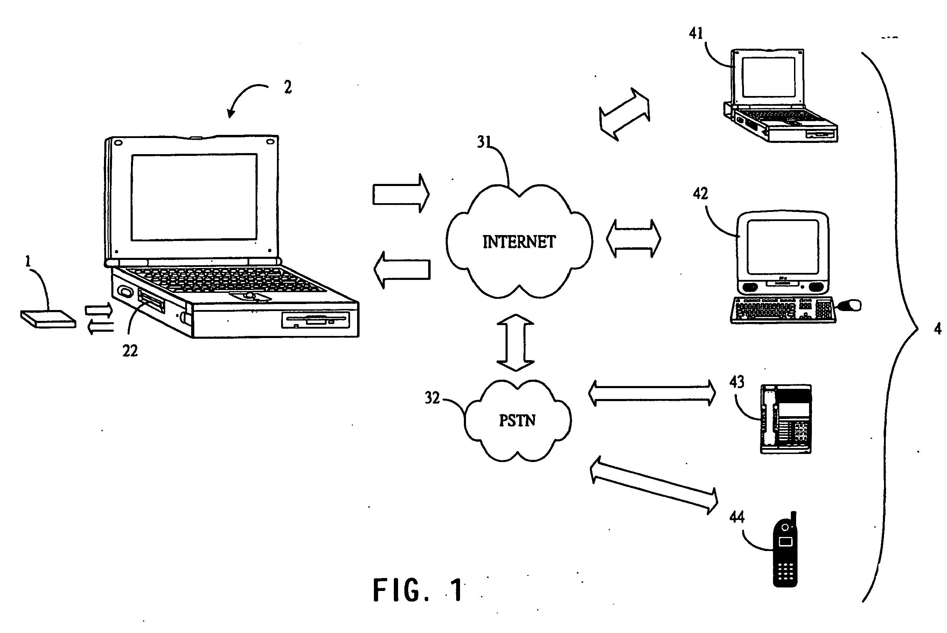

The present invention, a wireless handset 1 for VoIP (called a VoIP wireless handset 1), as indicated in FIG. 1, may be inserted into an expansion slot 22 of a computer 2; that is, the VoIP wireless handset 1 can be inserted into any computer having an expansion socket. Though FIG.1 shows a laptop computer 2, the computer 2 may also be a desktop computer or the like. The expansion slot 22 may be any socket suitable for a PCMCIA card, a PC card, or an express card.

With the development of VoIP technology, the computer 2 may be adapted to communicate with a communications device 4 (such as another laptop computer 41 or a desktop computer 42), located at another site, through the Internet 31 to transmit voice data, or with a conventional telephone 43 or mobile phone 44 through a PSTN 32 by way of a service provider.

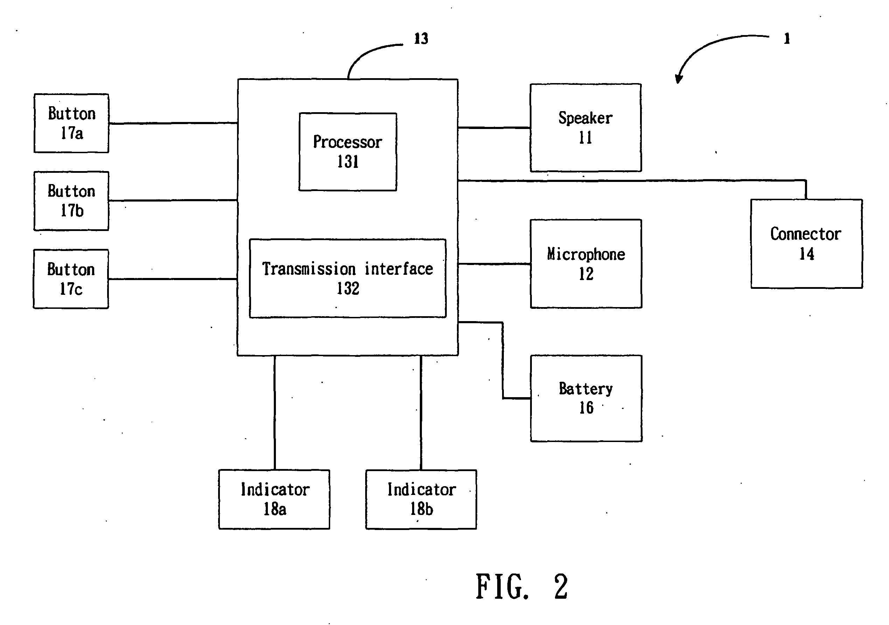

Referring to FIG. 2, FIG. 3, and FIG. 4, the VoIP wireless handset 1 of the present invention comprises a speaker 11 and a microphone 12 that a user may use to listen and speak in the manner of a conventional mobile phone. The VoIP wireless handset 1 of the present invention further comprises a connector 14 and a printed circuit board 13. The speaker 11, microphone 12 and connector 14 are electronically connected to the printed circuit board 13. The connector 14 of the VoIP wireless handset 1 can be inserted into the expansion slot 22 and connected electronically to the computer 2. Thus, the VoIP wireless handset 1 can be placed in the expansion slot 22 of the computer 2, which provides a fixed location to store the wireless handset 1 when it is not in use, and thus avoids the potential for losing the wireless handset 1.

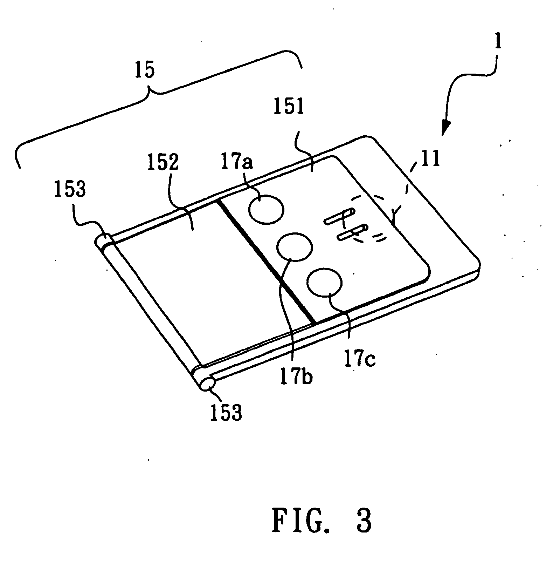

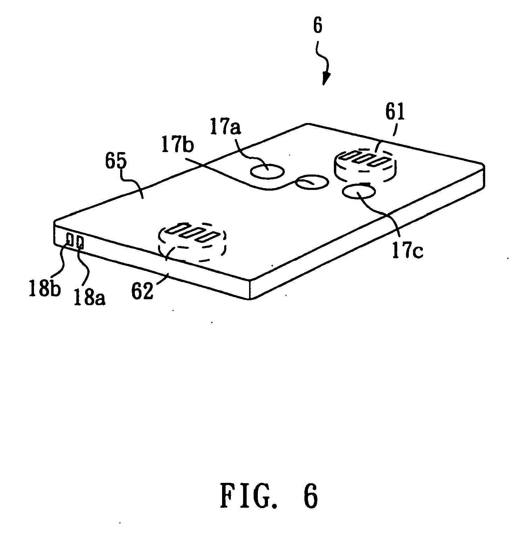

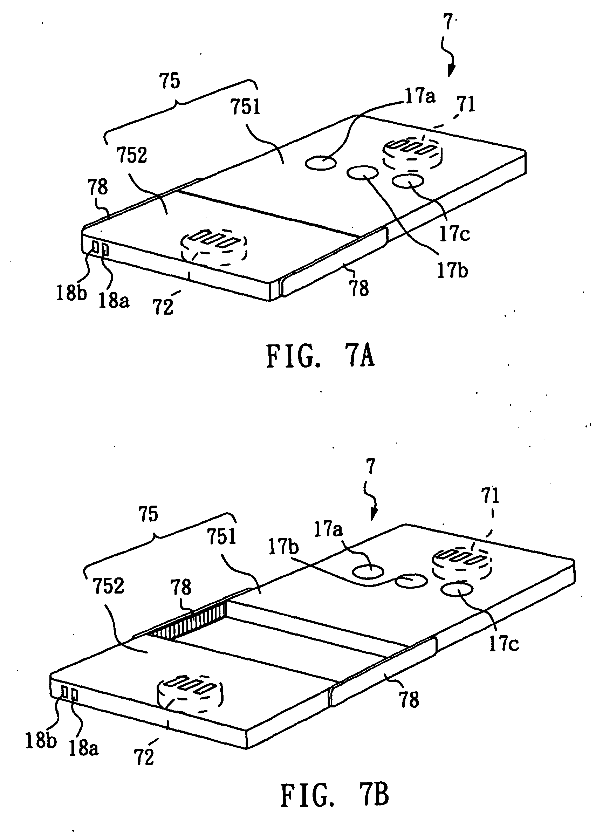

A case 15 is provided, as shown in FIG. 3, which covers the printed circuit board 13. Preferably, the shape of the case 15 is substantially the same as a typical expansion card, such as a PCMCIA card, a PC card, or an express card. As shown in FIG. 6, the shape of a case 65 for a VoIP wireless handset 6 is substantially the same as a general PC card. Alternatively, the shape of a case 75 for a VoIP wireless handset 7 is substantially the same as a general PC card, as shown in FIG. 7A and 7B. Consequently, when inserting the VoIP wireless handset 1, 6, or 7 into the expansion slot 22, because the VoIP wireless handset 1 and PC card (such as a PCMCIA card) have substantially same shape, the VoIP wireless handset 1, 6, or 7 can be fully placed into the expansion slot 22.

As show in FIG. 2, the printed circuit board 13 provided by the present invention has a processor 131 and a transmission interface 132. The transmission interface 132 is used to transmit voice data between the VoIP wireless handset 1 and the computer 2 when the user is in a telephone conversation. Moreover, referring to FIG. 1, the voice data communications between the computer 2 and the communications device 4, such as the aforementioned laptop computer 41, desktop computer 42, PSTN phone 43, or mobile phone 44, can be transmitted through the Internet 3, and additionally through a PSTN 32 by way of a service provider. Preferably, the transmission interface 132 is a Bluetooth transmission interface, a radio frequency (RF) transmission interface, a General Packet Radio Service (GPRS) transmission interface, a third generation (3G) transmission interface, an ultra wide band (UWB) transmission interface, a Wi-Fi transmission interface, or a Wimax transmission interface.

In a preferred embodiment, the VoIP wireless handset 1 according to this invention further comprises a battery 16 electronically connected to the printed circuit board 13. When the VoIP wireless handset 1 is inserted into the expansion slot 22 of the computer 2, the computer 2 may be used to charge the battery 16 through the connector 14. To provide longer operational time, the battery 16 may be a Li battery or a Li-polymer battery.

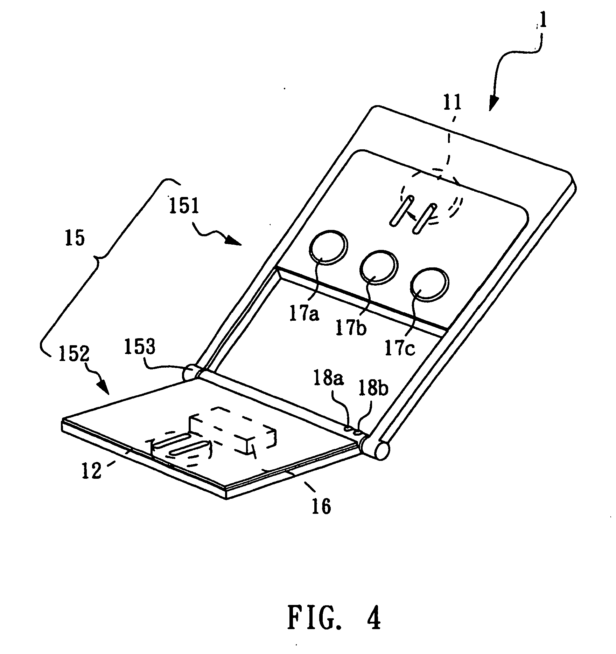

For those who prefer to use a handset in the traditional manner, as shown in FIG. 4, the case 15 according to the present invention comprises a speaker portion 151, a microphone portion 152, and a hinge 153, wherein the speaker 11 and the microphone 12 are located inside of the speaker portion 151 and the microphone portion 152, respectively. The hinge 153 is provided to connect the speaker portion 151 and the microphone portion 152. Therefore, the speaker portion 151 may rotate around the hinge 153 corresponding to the microphone portion 152. When the VoIP wireless handset 1 is in use, as shown in FIG. 4, the user may open the microphone portion 152 around the hinge 153 for use in a position like that of the traditional mobile phone.

Alternatively, in another preferred embodiment, with reference to FIG. 7A and FIG. 7B, a case 75 comprises a speaker portion 751, a microphone portion 752, and at least a connection support rod 78. A speaker 71 and a microphone 72 are located inside of the speaker portion 751 and the microphone portion 752, respectively. The connection support rod 78 is adapted to connect the speaker portion 751 with the microphone portion 752, whereby the speaker portion 751 can be pulled away from the microphone portion 751 along the connection support rod 78 by the user pulling on it.

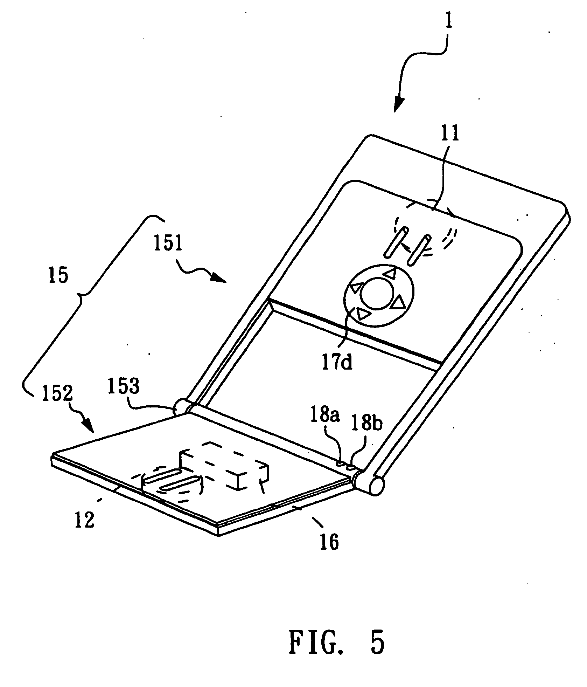

The user thus doesn't need to bend over in front of the computer 2 to carry on a conversation. Additionally, the present invention prevents conversations from being overheard from use of the speakers of the computer 2. When the microphone portion 152 is opened, as shown in FIG. 5, or the microphone portion 752 is pulled open, as shown in FIG. 7B, the microphone 12 or 72 is moved closer to the user's mouth, which avoids interference when speaking.

Referring to FIG. 4, 6, 7A, and 7B, in a preferred embodiment, the VoIP wireless handset 1 according to the present invention comprises at least a button 17a, 17b, or 17c for the user to input instructions. Though the buttons 17a, 17b, or 17c are in a circular shape provided on the cases 15 and 75, the figures should not be construed to limit the present invention. The buttons 17a, 17b, or 17c, for example, with reference to the FIG. 5, may be in the form of a 5-way functional button 17d on the case 15 for providing input. It is also possible to add other single function keys or buttons (not shown) to provide input.

The buttons 17a, 17b, 17c, or 17d are electronically connected to the printed circuit board 13 for the user to input at least an instruction to control operations of the processor 131. For example, the instructions may control turning the wireless handset 1, 6, or 7 on and off, matching signals between the wireless handset 1, 6, or 7 and the computer 2, turning the volume up and down, and/or picking up/hanging up the VoIP wireless handset 1, 6, or 7.

Referring to FIG. 4, 5, 6, 7A, or 7B, the VoIP wireless handset 1, 6, or 7, according to this invention may further comprise at least an indicator 18a, 18b, such as an LED indicator, electronically connected to the printed circuit board 13. Each of the indicators 18a or 18b can be seen from at least a portion of the surface of the case 15. In accordance with the indicator 18a and/or 18b, users may know the communications status and/or the battery status of the VoIP wireless handset 1, 6, or 7.

Although the present invention has been explained in relation to its preferred embodiment, it is to be understood that many other possible modifications and variations can be made without departing from the scope of the invention as hereinafter claimed.

## Claims

1. A wireless handset (1) for voice over Internet protocol "VoIP" communication capable of disposing in an expansion slot (22) of a computer (2) to communicate with a communications device (4) through a network (31) for voice data transmission, the wireless handset (1) comprising:
a speaker (11; 71);
a microphone (12; 72);
a printed circuit board (13) comprising a processor (131) and a transmission interface (132), the speaker (11; 71) and the microphone (12; 72) connected electronically to the printed circuit board (13), whereby the voice data is wirelessly transmitted
between the wireless handset (1) and the computer (2) and is further transmitted to the communications device (4) through the network (31) connection of the computer (2);
a connector (14) electronically connected to the printed circuit board (13), which provides an electronic connection between the wireless handset (1) and the computer (2);
a battery (16) electronically connected to the printed circuit board (13); and
a case (15) for covering the printed circuit board (13), wherein the case (15) has substantially the same shape as an expansion card, wherein the expansion card is a PCMCIA card, a PC card, or an express card, so that the wireless handset can be fully placed into the expansion slot when not in use;
wherein the battery (16) is charged by the computer (2) through the connector (14) when the wireless handset (1) is inserted into the computer (2).

2. The wireless handset (1) according to claim 1, wherein the case (15) further comprises:
a speaker portion (151), the speaker (11) disposed in the speaker portion (151);
a microphone portion (152), the microphone (12) disposed in the microphone portion (152); and
a hinge (153) for connecting the speaker portion (151) and the microphone portion (152), wherein the microphone portion (152) is capable of rotating around the hinge (153) corresponding to the speaker portion (151).

3. The wireless handset (1) according to any of claim 1 to claim 2, wherein the case (15) further comprises:
a speaker portion (751), the speaker (71) disposed in the speaker portion (751);
a microphone portion (752), the microphone (72) disposed in the microphone portion (752); and
at least a connection support rod (78) for connecting the speaker portion (751) and the microphone portion (752), wherein the speaker portion (751) is capable of pulling away from the microphone portion (752) along the connection support rod (78).

4. The wireless handset (1) according to any of claim 1 to claim 3, further comprising at least a button (17a, 17b, 17c) for inputting at least an instruction, the button (17a, 17b, 17c) connected electronically to the printed circuit board (13) to control an operation of the processor (131) by the instruction.

5. The wireless handset (1) of claim 4, wherein the button (17a, 17b, 17c) is an on/off button, a match button, a pick up/hang up button, or a volume control button.

6. The wireless handset (1) of claim 1, further comprising at least an indicator (18a, 18b) electrically connected to the printed circuit board (13), the indicator (18a, 18b) indicating a power status of the battery (16).

7. The wireless handset (1) according to any of claim 1 to claim 5, further comprising at least an indicator (18a, 18b) electrically connected to the printed circuit board (13), the indicator (18a, 18b) indicating a communications status.

8. A computer (2) for communicating with a communications device (4) through an Internet connection to provide transmission of voice data, the computer (2) comprising:
an expansion slot (22); and
a wireless handset (1) for voice over Internet protocol "VoIP" communication
**characterized in that** the wireless handset (1) is capable of disposing in the expansion slot (22), wherein the wireless handset (1) comprises:
a speaker (11; 71);
a microphone (12; 72);
a printed circuit board (13) comprising a processor (131) and a transmission interface (132), the speaker (11; 71) and the microphone (12; 72) connected electronically to the printed circuit board (13),
whereby the voice data is wirelessly transmitted between the wireless handset (1) and the computer (2) and subsequently transmitted to the communications
device (4) through the Internet connection of the computer (2);
a connector (14) electronically connected to the printed circuit board (13), which provides an electronic connection between the wireless handset (1) and the computer (2);
a battery (16) electronically connected to the printed circuit board (13); and
a case (15) for covering the printed circuit board (13), wherein the case (15) has substantially the same shape as an expansion card, wherein the expansion card is a PCMCIA card, a PC card, or an express card, so that the wireless handset can be fully placed into the expansion slot when not in use;
wherein the battery (16) is charged by the computer (2) through the connector (14) when the wireless handset (1) is inserted into the computer (2).

9. The computer (2) according to claim 8, wherein the case (15) of the wireless handset (1) further comprises:
a speaker portion (151), the speaker (11) disposed in the speaker portion (151);
a microphone portion (152), the microphone (12) disposed in the microphone portion (152); and
a hinge (153) for connecting the speaker portion (151) and the microphone portion (152), wherein the microphone portion (152) is capable of rotating around the hinge (153) corresponding to the speaker portion (151).

10. The computer (2) according to any of claim 8 to claim 9, wherein the case (15) of the wireless handset (1) further comprises:
a speaker portion (751), the speaker (71) disposed in the speaker portion (751);
a microphone portion (752), the microphone (72) disposed in the microphone portion (752); and
at least a connection support rod (78) for connecting the speaker portion (751) and the microphone portion (752), wherein the speaker portion (751) is capable of pulling away from the microphone portion (752) along the connection support rod (78).

11. The computer (2) according to any of claim 8 to claim 10, wherein the wireless handset (1) further comprises at least a button (17a, 17b, 17c) for inputting at least an instruction, and the button (17a, 17b, 17c) is connected electronically to the printed circuit board (13) to control an operation of the processor (131) by the instruction.

12. The computer (2) of claim 11, wherein the button (17a, 17b, 17c) is an on/off button, a match button, a pick up/hang up button, or a volume control button.

13. The computer (2) of claim 8, wherein the wireless handset (1) further comprises at least an indicator (18a, 18b) electrically connected to the printed circuit board (13), and the indicator (18a, 18b) is capable of indicating a power status of the battery (16).

14. The computer (2) according to any of claim 8 to claim 12, wherein the wireless handset (1) further comprises at least an indicator (18a, 18b) electrically connected to the printed circuit board (13), and the indicator (18a, 18b) is capable of indicating a communications status.

## Patentansprüche

1. Funk-Handapparat (1) für Sprache-über-Internet-Protokoll-"VoIP"-Kommunikation, geeignet zum Anordnen in einem Erweiterungssteckplatz (22) eines Computers (2) zum Kommunizieren mit einem Kommunikationsgerät (4) mittels eines Netzwerks (31) zur Sprachdatenübertragung, wobei der Funk-Handapparat (1) aufweist:
einen Lautsprecher (11; 71);
ein Mikrophon (12; 72);
eine Platine (13), die einen Prozessor (131) und eine Übertragungsschnittstelle (132) aufweist, wobei der Lautsprecher (11; 71) und das Mikrophon (12; 72) elektronisch mit der Platine (13) verbunden sind, wobei die Sprachdaten drahtlos zwischen dem Funk-Handapparat (1) und dem Computer (2) übertragen werden und ferner an das Kommunikationsgerät (4) mittels der Netzwerk(31)-Verbindung des Computers (2) übertragen werden;
einen Konnektor (14), der elektronisch mit der Platine (13) verbunden ist und eine elektronische Verbindung zwischen dem Funk-Handapparat (1) und dem Computer (2) bereitstellt;
eine Batterie (16), die elektronisch mit der Platine (13) verbunden ist; und
ein Gehäuse (15) zum Abdecken der Platine (13), wobei das Gehäuse (15) im Wesentlichen dieselbe Form wie die Erweiterungskarte hat, wobei die Erweiterungskarte eine PCMCIA-Karte, eine PC-Karte oder eine Express-Karte ist, so dass der Funk-Handapparat vollständig in dem Erweiterungssteckplatz platziert werden kann, wenn er nicht in Gebrauch ist;
wobei die Batterie (16) von dem Computer (2) mittels des Konnektors (14) geladen wird, wenn der Funk-Handapparat (1) in den Computer (2) eingesteckt ist.

2. Funk-Handapparat (1) gemäß Anspruch 1, wobei das Gehäuse (15) ferner aufweist:
einen Lautsprecherabschnitt (151), wobei der Lautsprecher (11) in dem Lautsprecherabschnitt (151) angeordnet ist;
einen Mikrophonabschnitt (152), wobei das Mikrophon (12) in dem Mikrophonabschnitt (152) angeordnet ist; und
ein Gelenk (153) zum Verbinden des Lautsprecherabschnitts (151) und des Mikrophonabschnitts (152), wobei der Mikrophonabschnitt (152) geeignet ist, um das Gelenk (153) entsprechend dem Lautsprecherabschnitt (151) zu rotieren.

3. Funk-Handapparat (1) gemäß einem der Ansprüche 1 bis 2, wobei das Gehäuse (15) ferner aufweist:
einen Lautsprecherabschnitt (751), wobei der Lautsprecher (71) in dem Lautsprecherabschnitt (751) angeordnet ist;
einen Mikrophonabschnitt (752), wobei das Mikrophon (72) in dem Mikrophonabschnitt (752) angeordnet ist; und
mindestens einen Verbindungshaltestab (78) zum Verbinden des Lautsprecherabschnitts (751) und des Mikrophonabschnitts (752), wobei der Lautsprecherabschnitt (751) geeignet ist, sich von dem Mikrophonabschnitt (752) entlang des Verbindungshaltestabs (78) zu entfernen.

4. Funk-Handapparat (1) gemäß einem der Ansprüche 1 bis 3, ferner aufweisend mindestens einen Knopf (17a, 17b, 17c) zum Eingeben mindestens eines Befehls, wobei der Knopf (17a, 17b, 17c) elektronisch mit der Platine (13) verbunden ist zum Steuern des Betriebs des Computers (131) mittels des Befehls.

5. Funk-Handapparat (1) gemäß Anspruch 4, wobei der Knopf (17a, 17b, 17c) ein Ein/Aus-Knopf, ein Abstimm-Knopf, ein Abhebe/Auflege-Knopf oder ein Lautstärkeregelungsknopf ist.

6. Funk-Handapparat (1) gemäß Anspruch 1, ferner aufweisend mindestens eine Anzeige (18a, 18b), die elektrisch mit der Platine (13) verbunden ist, wobei die Anzeige (18a, 18b) den Ladestatus der Batterie (16) anzeigt.

7. Funk-Handapparat (1) gemäß einem der Ansprüche 1 bis 5, ferner aufweisend mindestens eine Anzeige (18a, 18b), die elektrisch mit der Platine (13) verbunden ist, wobei die Anzeige (18a, 18b) einen Kommunikationsstatus anzeigt.

8. Computer (2) zum Kommunizieren mit einem Kommunikationsgerät (4) mittels einer Internet-Verbindung zum Bereitstellen einer Sprachdatenübertragung, wobei der Computer (2) aufweist:
einen Erweiterungssteckplatz (22); und
einen Funk-Handapparat (1) für Sprache-über-Internet-Protokoll-"VoIP"-Kommunikation
dadurch charakterisiert, dass der Funk-Handapparat (1) geeignet ist zum Anordnen in dem Erweiterungssteckplatz (22),
wobei der Funk-Handapparat (1) aufweist:
einen Lautsprecher (11; 71);
ein Mikrophon (12; 72);
eine Platine (13), die einen Prozessor (131) und eine Übertragungsschnittstelle (132) aufweist, wobei der Lautsprecher (11; 71) und das Mikrophon (12; 72) elektronisch mit der Platine (13) verbunden sind, wobei die Sprachdaten drahtlos zwischen dem Funk-Handapparat (1) und dem Computer (2) übertragen werden und anschließend an das Kommunikationsgerät (4) mittels der Internet-Verbindung des Computers (2) übertragen werden; einen Konnektor (14), der elektronisch mit der Platine (13) verbunden ist und eine elektronische Verbindung zwischen dem Funk-Handapparat (1) und dem Computer (2) bereitstellt;
eine Batterie (16), die elektronisch mit der Platine (13) verbunden ist; und
ein Gehäuse (15) zum Abdecken der Platine (13), wobei das Gehäuse (15) im Wesentlichen dieselbe Form wie die Erweiterungskarte hat, wobei die Erweiterungskarte eine PCMCIA-Karte, eine PC-Karte oder eine Express-Karte ist, so dass der Funk-Handapparat vollständig in dem Erweiterungssteckplatz platziert werden kann, wenn er nicht in Gebrauch ist;
wobei die Batterie (16) von dem Computer (2) mittels des Konnektors (14) geladen wird, wenn der Funk-Handapparat (1) in den Computer (2) eingesteckt ist.

9. Computer (2) gemäß Anspruch 8, wobei das Gehäuse (15) des Funk-Handapparats (1) ferner aufweist:
einen Lautsprecherabschnitt (151), wobei der Lautsprecher (11) in dem Lautsprecherabschnitt (151) angeordnet ist;
einen Mikrophonabschnitt (152), wobei das Mikrophon (12) in dem Mikrophonabschnitt (152) angeordnet ist; und
ein Gelenk (153) zum Verbinden des Lautsprecherabschnitts (151) und des Mikrophonabschnitts (152), wobei der Mikrophonabschnitt (152) geeignet ist, um das Gelenk (153) entsprechend dem Lautsprecherabschnitt (151) zu rotieren.

10. Computer (2) gemäß einem der Ansprüche 8 bis 9, wobei das Gehäuse (15) des Funk-Handapparats (1) ferner aufweist:
einen Lautsprecherabschnitt (751), wobei der Lautsprecher (71) in dem Lautsprecherabschnitt (751) angeordnet ist;
einen Mikrophonabschnitt (752), wobei das Mikrophon (72) in dem Mikrophonabschnitt (752) angeordnet ist; und
mindestens einen Verbindungshaltestab (78) zum Verbinden des Lautsprecherabschnitts (751) und des Mikrophonabschnitts (752), wobei der Lautsprecherabschnitt (751) geeignet ist, sich von dem Mikrophonabschnitt (752) entlang des Verbindungshaltestabs (78) zu entfernen.

11. Computer (2) gemäß einem der Ansprüche 8 bis 10, wobei der Funk-Handapparat (1) ferner mindestens einen Knopf (17a, 17b, 17c) zum Eingeben mindestens eines Befehls aufweist, wobei der Knopf (17a, 17b, 17c) elektronisch mit der Platine (13) verbunden ist zum Steuern des Betriebs des Computers (131) mittels des Befehls.

12. Computer (2) gemäß Anspruch 11, wobei der Knopf (17a, 17b, 17c) ein Ein/Aus-Knopf, ein Abstimm-Knopf, ein Abhebe/Auflege-Knopf oder ein Lautstärkeregelungsknopf ist.

13. Computer (2) gemäß Anspruch 8, wobei der Funk-Handapparat (1) ferner mindestens eine Anzeige (18a, 18b) aufweist, die elektrisch mit der Platine (13) verbunden ist, und wobei die Anzeige (18a, 18b) geeignet ist, den Ladestatus der Batterie (16) anzuzeigen.

14. Computer (2) gemäß einem der Ansprüche 8 bis 12, wobei der Funk-Handapparat (1) ferner mindestens eine Anzeige (18a, 18b) aufweist, die elektrisch mit der Platine (13) verbunden ist, und wobei die Anzeige (18a, 18b) geeignet ist, einen Kommunikationsstatus anzuzeigen.

## Revendications

1. Combiné téléphonique sans fil (1) destiné à une communications de voix sur IP « VoIP » qui peut être placé dans un connecteur d'extension (22) d'un ordinateur (2) de manière à communiquer avec un dispositif de communications (4) par l'intermédiaire d'un réseau (31) pour une transmission de données de voix, le combiné téléphonique sans fil (1) comprenant :
un haut-parleur (11 ; 71);
un microphone (12 ; 72);
une carte de circuit imprimé (13) qui comprend un processeur (131) et une interface de transmission (132), le haut-parleur (11 ; 71) et le microphone (12 ; 72) étant connectés de manière électronique à la carte de circuit imprimé (13), grâce à quoi des données de voix sont transmises d'une manière sans fil entre le combiné téléphonique sans fil (1) et l'ordinateur (2) et elles sont en outre transmises au dispositif de communications (4) par l'intermédiaire de la connexion de réseau (31) de l'ordinateur (2) ;
un connecteur (14) connecté de manière électronique à la carte de circuit imprimé (13), qui fournit une connexion électronique entre le combiné téléphonique sans fil (1) et l'ordinateur (2) ;
une batterie (16) connectée de manière électronique à la carte de circuit imprimé (13) ; et
un boîtier (15) destiné à couvrir la carte de circuit imprimé (13), dans lequel le boîtier (15) présente sensiblement la même forme qu'une carte d'extension, dans lequel la carte d'extension est une carte PCMCIA, une carte PC, ou une carte Express, de telle sorte que le combiné téléphonique sans fil puisse être placé entièrement dans le connecteur d'extension quand il n'est pas en service ;
dans lequel la batterie (16) est chargée par l'ordinateur (2) par l'intermédiaire du connecteur (14) lorsque le combiné téléphonique sans fil (1) est inséré dans l'ordinateur (2).

2. Combiné téléphonique sans fil (1) selon la revendication 1, dans lequel le boîtier (15) comprend en outre :
une partie haut-parleur (151), le haut-parleur (11) étant disposé dans la partie haut-parleur (151) ;
une partie microphone (152), le microphone (12) étant disposé dans la partie microphone (152) ; et
une charnière (153) destinée à connecter la partie haut-parleur (151) et la partie microphone (152), dans lequel la partie microphone (152) est capable de tourner autour de la charnière (153) de façon à correspondre à la partie haut-parleur (151).

3. Combiné téléphonique sans fil (1) selon l'une quelconque des revendications 1 à 2, dans lequel le boîtier (15) comprend en outre :
une partie haut-parleur (751), le haut-parleur (71) étant disposé dans la partie haut-parleur (751) ;
une partie microphone (752), le microphone (72) étant disposé dans la partie microphone (752) ; et
au moins une tige de support de connexion (78) destinée à connecter la partie haut-parleur (751) et la partie microphone (752), dans lequel la partie haut-parleur (751) est capable d'être éloignée de la partie microphone (752) le long de la tige de support de connexion (78).

4. Combiné téléphonique sans fil (1) selon l'une quelconque des revendications 1 à 3, comprenant en outre au moins un bouton (17a, 17b, 17c) destiné à entrer au moins une instruction, le bouton (17a, 17b, 17c) étant connecté de manière électronique à la carte de circuit imprimé (13) de façon à commander une opération du processeur (131) à l'aide de l'instruction.

5. Combiné téléphonique sans fil (1) selon la revendication 4, dans lequel le bouton (17a, 17b, 17c) est un bouton marche / arrêt, un bouton de fond de concordance, un bouton de décrochage / raccrochage, ou un bouton de réglage de volume.

6. Combiné téléphonique sans fil (1) selon la revendication 1, comprenant en outre au moins un indicateur (18a, 18b) connecté de manière électrique à la carte de circuit imprimé (13), l'indicateur (18a, 18b) indiquant un état de puissance de la batterie (16).

7. Combiné téléphonique sans fil (1) selon l'une quelconque des revendications 1 à 5, comprenant en outre au moins un indicateur (18a, 18b) connecté de manière électrique à la carte de circuit imprimé (13), l'indicateur (18a, 18b) indiquant un état de communications.

8. Ordinateur (2) destiné à communiquer avec un dispositif de communications (4) par l'intermédiaire d'une connexion Internet de manière à fournir une transmission de données de voix, l'ordinateur (2) comprenant :
un connecteur d'extension (22) ; et
un combiné téléphonique sans fil (1) pour une communications de voix sur IP « VoIP » ;
**caractérisé en ce que** le combiné téléphonique sans fil (1) peut être placé dans le connecteur d'extension (22), dans lequel le combiné téléphonique sans fil (1) comprend :
un haut-parleur (11 ; 71) ;
un haut-parleur (12 ; 72) ;
une carte de circuit imprimé (13) qui comprend un processeur (131) et une interface de transmission (132), le haut-parleur (11 ; 71) et le microphone (12 ; 72) étant connectés de manière électronique à la carte de circuit imprimé (13), grâce à quoi les données de voix sont transmises d'une manière sans fil entre le combiné téléphonique sans fil (1) et l'ordinateur (2) et elles sont transmises par la suite au dispositif de communications (4) par l'intermédiaire de la connexion Internet de l'ordinateur (2) ;
un connecteur (14) connecté de manière électronique à la carte de circuit imprimé (13), qui fournit une connexion électronique entre le combiné téléphonique sans fil (1) et l'ordinateur (2) ;
une batterie (16) connectée de manière électronique à la carte de circuit imprimé (13) ; et
un boîtier (15) destiné à couvrir la carte de circuit imprimé (13), dans lequel le boîtier (15) présente sensiblement la même forme qu'une carte d'extension, dans lequel la carte d'extension est une carte PCMCIA, une carte PC, ou une carte Express, de telle sorte que le combiné téléphonique sans fil puisse être placé entièrement dans le connecteur d'extension quand il n'est pas en service ;
dans lequel la batterie (16) est chargée par l'ordinateur (2) par l'intermédiaire du connecteur (14) lorsque le combiné téléphonique sans fil (1) est inséré dans l'ordinateur (2).

9. Ordinateur (2) selon la revendication 8, dans lequel le boîtier (15) du combiné téléphonique sans fil (1) comprend en outre :
une partie haut-parleur (151), le haut-parleur (11) étant disposé dans la partie haut-parleur (151) ;
une partie microphone (152), le microphone (12) étant disposé dans la partie microphone (152) ; et
une charnière (153) destinée à connecter la partie haut-parleur (151) et la partie microphone (152), dans lequel la partie microphone (152) est capable de tourner autour de la charnière (153) de manière à correspondre à la partie haut-parleur (151).

10. Ordinateur (2) selon la revendication 8 ou la revendication 9, dans lequel le boîtier (15) du combiné téléphonique sans fil (1) comprend en outre :
une partie haut-parleur (751), le haut-parleur (71) étant disposé dans la partie haut-parleur (751) ;
une partie microphone (752), le microphone (72) étant disposé dans la partie microphone (752) ; et
au moins une tige de support de connexion (78) destinée à connecter la partie haut-parleur (751) et la partie microphone (752), dans lequel la partie haut-parleur (751) est capable d'être éloignée de la partie microphone (752) le long de la tige de support de connexion (78).

11. Ordinateur (2) selon l'une quelconque des revendications 8 à 10, dans lequel le combiné téléphonique sans fil (1) comprend en outre au moins un bouton (17a, 17b, 17c) destiné à entrer au moins une instruction, le bouton (17a, 17b, 17c) étant connecté de manière électronique à la carte de circuit imprimé (13) de façon à commander une opération du processeur (131) à l'aide de l'instruction.

12. Ordinateur (2) selon la revendication 11, dans lequel le bouton (17a, 17b, 17c) est un bouton marche / arrêt, un bouton de fond de concordance, un bouton de décrochage / raccrochage, ou un bouton de réglage de volume.

13. Ordinateur (2) selon la revendication 8, dans lequel le combiné téléphonique sans fil (1) comprend en outre au moins un indicateur (18a, 18b) connecté de manière électrique à la carte de circuit imprimé (13), et l'indicateur (18a, 18b) est capable d'indiquer un état de puissance de la batterie (16).

14. Ordinateur (2) selon l'une quelconque des revendications 8 à 12, dans lequel le combiné téléphonique sans fil (1) comprend en outre au moins un indicateur (18a, 18b) connecté de manière électrique à la carte de circuit imprimé (13), et l'indicateur (18a, 18b) est capable d'indiquer un état de communications.
